# EUROPEAN PATENT APPLICATION

(11) **EP 2 808 666 A2**
(43) Date of publication of application: **03.12.2014**
(21) Application number: 13180885.9
(22) Date of filing: 19.08.2013
(51) Int. Cl.: G01M 3/00, G01M 3/18, G01M 3/22

(54) **Device for container leakage detection and method for the same**

(30) Priority: 30.05.2013 US 201313905366
(71) Applicant: Luybyanitsky, Andrey, 20308 Narva (EE)
(72) Inventor: Luybyanitsky, Andrey, 20308 Narva (EE)
(74) Representative: Zahn, Matthias

(57) **Abstract**

A mountable device (1) and system for leakage detection and monitoring of various hazardous materials that can be stored and transported in variety of containers, including ones mounted in railroad cars, tank trailers, trucks, and other dedicated vessels. The device (1) includes a sensor array (2) to detect a potential leakage, wireless communication means (24), processor and the batteries in a single enclosure. The device (1) can be readily mounted and dismounted using a dedicated opening (3 in the container's valves protection box (4) or its lid (5) and provides communications with a respective wireless sensor network.

## Description

### FIELD OF INVENTION

The present invention broadly relates to the hazardous materials detection, alerting, and monitoring and, in particular, to mobile containers and dedicated vehicles that are used to transport and storage of such materials, and detectors that are used for leakage detection from mentioned containers.

### BACKGROUND OF THE INVENTION

Hazardous material (HAZMAT) is a transported in commerce substance that poses significant risks to human safety, public security, property, and the environment if accidentally released. The incidents can occur during manufacture, transportation, use, or storage of HAZMATs. They may also occur as a result of accidents during the transportation of hazardous materials, either by rail, road, air, or water, and equipment failures resulting in the release of hazardous materials to the environment.

The USDOT (US Department of Transportation) divides hazardous materials (HAZMAT) into nine classes, such as explosives, gases, flammable solids, flammable liquids, oxidizers and organic peroxides, toxic materials and infectious substances, radioactive materials, corrosive materials and miscellaneous dangerous goods. Each of these classes of materials is dangerous and potentially harmful to people. Accordingly, it is crucial to provide safe handling and transportation by effective monitoring HAZMATs potential leakage and discharge (release).

Several HAZMAT monitoring systems have been proposed in a prior art. Such monitoring devices and systems relate to a public health, work-place safety, and the protection of the environment since that many chemicals and substances are indeed hazardous if released or mishandled. Moreover, the monitoring also relates to antiterrorism activities, since chemicals and substances can potentially be used in terrorist attacks. It is therefore to be understood that disclosed monitoring also broadly relates to asset monitoring and asset protection in general.

Monitoring may include HAZMAT access tracking or leakage/spill event notification. There are few detecting and monitoring sensors have been proposed HAZMAT leakage detection and prevention. For example, U.S. 7,847,676 discloses an event-driven mobile hazmat monitoring system. The tank container with a built-in electric monitoring device is disclosed in U.S. 7,322,227.

However, there is still an unmet need for a new unified, universal leakage wireless detecting device that can be easily mounted and dismounted on a variety of containers dedicated for HAZMATs storage and transportation.

Accordingly, sensor devices and sensing method have to be developed to provide a degree of automated HAZMAT leakage detection and/or monitoring. Although some pre-existing devices have been generally adequate for their intended purposes, they have not been satisfactory in all respects.

### SUMMARY OF THE INVENTION

A device for monitoring a leakage of a plurality of different HAZMATs is disclosed. The device is mounted on a tank which has a valve assembly to input / output the HAZMATs and an enclosure to protect and seal the valve assembly. The enclosure has an opening for inserting the device, which is adapted to be mounted / un-mounted through this opening and seal the enclosure upon its mounting.

The device includes a sensor positioned inside the tank enclosure, in proximity of the valve assembly, to detect the HAZMATs-related parameters, a global positioning sensor (e.g. GPS), a battery, a memory and a wireless transceiver (e.g. satellite communication, or terrestrial communication).

The device is further capable of alerting emergency personnel if HAZMATs parameters are above the predefined threshold. The sensor of the device is capable to detect multiple parameters for different HAZMATs, such as chemical, biological, radiological, nuclear, or explosive materials.

The device can be installed on a movable HAZMAT tank, such as a railroad car, a tanker truck, a maritime shipping container, and provide a feedback to the tank operator. The device can include an enclosure sealing monitoring and an alarm system to inform the emergency personnel if the enclosure is not sealed. The battery can be chargeable from a vehicle.

The device can also employ a vibration-, solar- or wind-energy harvesting means and a wake-up means to reduce power consumption and provide a stealth feature in which the sensors only respond upon receipt of an appropriate wake-up signal. The sensor and the position sensor can operate in a pulse regime with a variable period between measurements.

The method for monitoring transportation and storage of hazardous materials is further disclosed. The method describes HAZMAT's detection and monitoring in dedicated tanks for HAZMAT transportation or storage by a sensor positioned inside an enclosure, measuring the tank location by a GPS, transmitting measured data to a processing unit at a remote location, comparing it with a predefined threshold and providing a feedback to emergency personnel if needed.

The sensor allows its easy replacement and an enclosure sealing. The method also includes energy-harvesting means to convert the ambient energy into the electrical power to reduce the power consumption of the sensors. The tank can be mounted on a vehicle, and an alarm signal from the sensor can be transmitted to a tank operator's cellular phone (e.g. by a different sound) or represented visually, if needed.

### BRIEF DESCRIPTION OF THE DRAWINGS

Figure 1. Schematic representation of a HAZMAT detecting device in accordance with a preferred embodiment of the invention.

Figure 2. The detector schematic diagram having Electronic and Sensing parts.

Figure 3. Possible types and methods of the data transmission in accordance with a preferred embodiment of the invention.

### DETAILED DESCRIPTION OF THE INVENTION

Preferred embodiments of the present invention are next described in referred drawings. The following description of the preferred embodiment(s) is merely exemplary in nature and is in no way intended to limit the invention, its application, or uses.

Hazardous substances, (e.g. Liquid Bromine Br2 or Liquid Chlorine Cl2) typically being transported in a liquid form in tank containers that are specially adapted for this purpose. The containers and vessels can include (not limited to) railroad tank cars, tank trailers, tank trucks, ISO tank containers etc. The container loading / unloading procedure is typically made through a system of valves, i.e. valves assembly that is located on the hatch at the top of the tank (container or vessel).

In order to protect the valves assembly from damage or unauthorized access, the protective cover (protective box) is used. The protective box has the opening lid (cover).

During the HAZMAT transportation, the leakage probability is increased due to the loosened valves, seals and protective membranes. The early identification of such events, including the nature, time and location of the leakage, is very important for HAZMAT shipper, customer, transport organizations, emergency responders and the proper authorities' response.

Moreover, due to the changes in temperature, pressure, vibration and other factors, HAZMATs can be transformed from a liquid to a gaseous phase, increasing the risk of leakage through the seals of the valve assembly. Early dangerous gases leakage detection and alarm system plays an important role in public safety, transportation and the environment.

Accordingly, the disclosed device and method provides detecting leaks of hazardous gases from containers, tanks and vessels. The sensing device (the detector) can be readily mounted and dismounted using a universal mount through the opening (boring) in container's valves assembly protection box.

The disclosed device is capable of providing a HAZMAT alert and transmitting the HAZMAT alert in response to the hazard event such as a leakage, wherein the HAZMAT alert comprises information relating to the hazardous material and wherein transmitting the hazardous material alert comprises sending a transmission from the movable container dedicated for HAZMATs storage and transportation that can be directly received by emergency personnel responding to such hazard event.

The disclosed device is capable of receiving a reply transmission at the movable container dedicated for HAZMATs storage and transportation in response to transmitting the hazardous material alert, wherein the reply transmission comprises instructions for controlling a system of the vehicle.

The term "tank ", as used herein is defined as the any container being used for HAZMAT transportation and storage, such as ISO tank container, a movable rail car tank, road tank, marine tanker or any other movable or stationary vessel.

In the typical configuration of the ISO tank container, the lid of the container's valves protection box has a sealed closure. In the preferred embodiment of the invention, the detector can be readily mounted and dismounted using a universal mount and fasteners through the opening (boring) in the lid of the valves assembly protection box.

In the preferred embodiment of the invention, the detector is mounted through the opening in the protective cover in a vertical position.

In the preferred embodiment of the invention, the detector communications within a respective wireless sensor network.

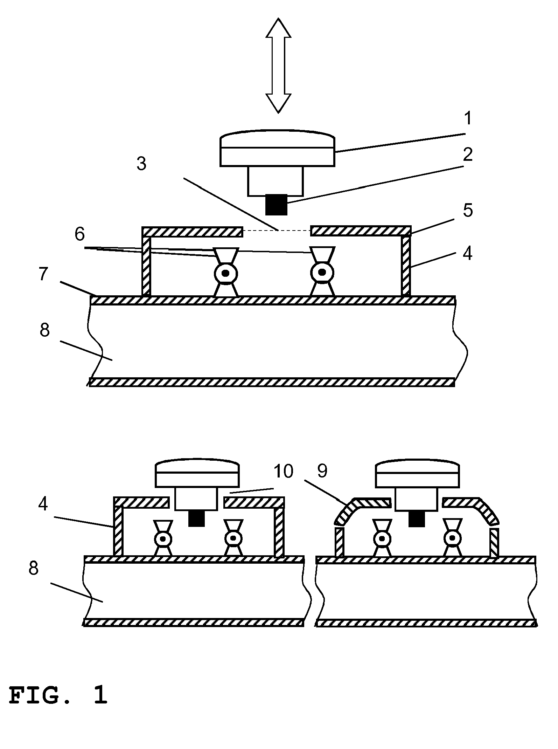

FIG. 1 is a schematic representation of a HAZMAT detecting device in accordance with a preferred embodiment of the present invention. In the reference to the FIG. 1, the device (hereinafter the detector) 1, with a sensor array 2 is mounted through the opening in the lid (closure) 3 of the protection box 4, which is mounted on the top of the container 7 that contains a HAZMAT 8.

The detector installation is shown in FIG. 1, where an electronic detector 1 is vertically mounted through the mounting opening 3, using fasteners or an alternative fixing method. In the preferred embodiment of the invention, the mounting opening 3 (opens from outside) is located at the lid 5 or 9 of the protective box 4, which protects the valve assembly 6. Such protective box is a standard element of an ISO tank container 8, of a rail car tank, road tanker or other vessels designed for HAZMAT transportation and storage.

The detector 1 is mounted through the dedicated opening 3. In the preferred configuration of the invention, the opening (boring) 3 is drilled through the lid (cover) 5 of the protective box 4, or through the removable protective box 9 itself (i.e. cap or dome with no lid), in such a way that the detector enclosure 1 is located outside of the protective box 4 (or dome 9), while detector's sensitive elements 2 (sensor array) is located inside of the protective box 4 or 9.

The HAZMAT detecting device is mounted to a preferably mobile chemical container 8 for the purpose of monitoring the mobile chemical container 8, and optionally the environment surrounding the container.

The proposed system also includes a sensor 10 to control the protective box sealing. A sealed isolation of the volume inside the protective box needs to be provided in order to get accurate chemical sensing measurement data.

The detector is designed to monitor the volume formed between the valve assembly pad and the lid of the protective box (or dome), since the leakage typically occurs due to the failure sealing gaskets in safety valves, fittings and appliances installed on the pad.

Moreover, the detector is designed for detecting a HAZMAT leakage during its transportation (by ISO tank containers, road, rail, etc.) and/or storage and monitoring/informing the operator (or driver) about the potential leakage by transferring the data through a wireless connection.

The transferred rata may include information about various parameters, such as: the chemical data, accelerometer readings, geographical location, time and date.

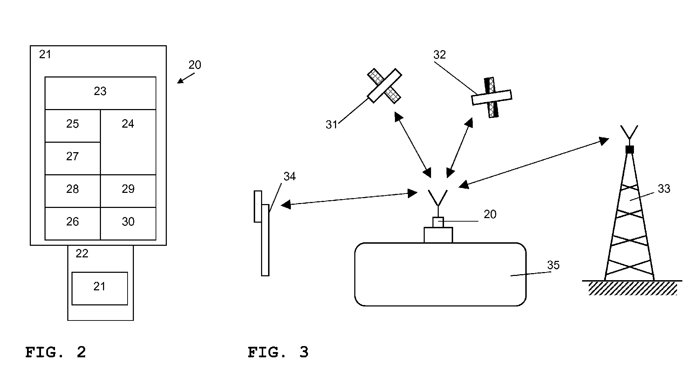

The detector 20 schematic diagram is shown in FIG. 2 and consists of two main parts: an Electronic part 21 and Sensing part 22.

The Electronic part 21 includes the following elements: a built-in Antenna 23, a Data Transceiver Unit 24 for wireless communications (e.g. satellite, cellular, WiFi, ZigBee, Rubee, etc.); a GPS (or similar) Sensor Unit 25, an Electronic Board 26 with a CPU (central processing unit); a non-volatile Memory Unit 27 for data recording and storage; a real-time Clock unit 28, an Accelerometer 29 or its combination for navigation purposes (to determine the speed, acceleration, direction, vibration and position), and a Battery unit 30.

With the reference to the FIG. 2, the Sensing part 22 includes a detector enclosure with fasteners and a sensor array 21 for detecting the presence, concentration, or any other parameters related to the Hazardous substances, depending on application (chemical, radioactive, bio-pathogenic, etc.)

In a preferred embodiment of the invention, the sensor array 21 includes a chemical sensor, such as an electrochemical sensor or based on a different principle of sensitivity, and a temperature sensor.

The CPU performs comparing of the measured parameters with a predefined threshold.

With the reference to the FIG. 1, in the preferred embodiment of the invention, the sensor array is located at the proximity to the valve assembly 6, within the space inside the protection box 4, where the released gas, vapor, spray, aerosol, radioactivity or bio-pathogens can be detected.

During its operation, the sensor array analyzes and records data from the chemical sensor or other sensor (e.g. radioactive or bio-pathogen sensor), a temperature sensor, an accelerometer, real time clock and positioning sensor (GPS or similar).

In the case when the current data is non-compliant with the pre-defined data values (presetted), the detector transmits the data (e.g. alone with an alert signal) to the "control room or emergency center" through the wireless communication channel. The measurement data (log) data is constantly recorded saved and can be retrieved for the purpose of monitoring, maintenance or arbitration.

In one embodiment an alarm signal is transmitted to a tank operator or driver if the sensor signal is above the predefined threshold. The alarm signal is in the form of cell phone call, the phone call sound being different from usual phone call sound. In another embodiment the alarm signal is a visual signal ( for example, a red signal light) on the vehicle panel, which easily seen by the operator/driver.

Unlike alternative methods, the proposed mounting method through the opening has the following advantages: 1. Ability to visually determine the presence or absence of the detector; 2. The detector is unobtrusive and does not interfere with the opening/closure of the lid or protective dome; 3. Preserves the vertical position the of the chemical and other sensor for its optimal performance; 4. Preserves the chemical or other sensor location directly above the valve for sensor's optimal performance characteristics; 5. The detector is unobtrusive and does not interfere with the valve assembly's repair, service or replacement; 6. If required, provides an additional (spare) source of power to the detector without opening the lid or protective dome; 7. Provides optimum location for the wireless Data Transceiver Unit and GPS Sensor Unit; 8. Provides a safe and convenient way to replace or repair the detector or its components; 9. Enables to detect the event of access to the container, by measuring an "open / close" position of the lid or dome using the data from Accelerometer; 10. Improves the performance reliability by using a reliable self-sufficient mechanical and electrical mount/dismount connection, without using external cables; 11. Ensures the removal of condensate from the sensor naturally by gravity; 12. It also provides a concealed mount of the detector inside the enclosure lid or dome, making an unauthorized access, disassembly, etc. difficult.

During its operation, the detector receives the information from the sensor array; the information may include a chemical or other sensor(s) data, a data from accelerometer, GPS, temperature, pressure time and other parameters. The detector further processes the data and by the CPU and records it the non-volatile Memory Unit.

In case when detector receives a data signal from a sensor array, accelerometer or GPS, which is falls out of the normal (pre-defined) range of data values, the detector transmits a corresponding message, including the data from chemical or other sensor and other parameters, such as: data from the accelerometer, GPS coordinates, time and date. Possible types and methods of transmission of the message are shown in FIG. 3, where the detector 20 is mounted on the top of the container 35. The detector 20 has communication means, such as: a global positioning satellite communication 31 (GPS or similar), a satellite telecommunication 32, a cell-phone communication means 33, and a short-range radio communication means 34 (WiFi, Bluetooth or similar).

The mobile container in the preferred embodiment is a railroad tanker car, however it should be understood that the descriptions herein relate equally as well to other types of mobile containers.

As used herein with respect to HAZMAT monitoring, the term "sensor" relates broadly to many types of devices that are each in some way sensitive to the security, integrity, configuration, condition, disposition, orientation, location, contents, or surroundings of a container.

Possible configuration of the disclosed in invention may include a motion detector, a video camera, a solar power (PV) panel, a radiation and electromagnetic sensing, abnormal vibration, acceleration or speed detection.

Furthermore, a chemical sensor can be a device that detects a particular chemical or substance, or detects a range of chemicals or substances. A chemical sensor can be a device that is sensitive to any presence of a chemical or substance that generally should not be present in any detectable quantity or concentration, such as a chemical weapon or biohazard. Moreover, a chemical sensor can be a device that generates a response to a raised concentration of a chemical or substance, that is generally otherwise present in safe, trace, or ambient concentrations.

The detector may operate in pulse regime with measuring the parameters periodically in order to prolong the battery life. In one embodiment the time period between measurements depends on how close are measured parameters to a predefined threshold. The time periods are shortened when the measured parameters are in proximity of the threshold.

In accordance with the present invention, in order to reduce power consumption and prolong battery life, a wake-up technology is utilized for the disclosed detector in the HAZMAT monitoring systems (especially for mobile gateways), as disclosed, for example, in US Patent No.7,529,547. The use of the wake-up technology provides reduced power consumption, prolongs internal power sources and provides a stealth advantage/security feature in which detectors may only respond upon receipt of an appropriate wake-up signal.

In accordance with the present invention, in order to reduce power consumption and prolong battery life, an energy-harvesting technology is utilized for the disclosed detector in the HAZMAT monitoring systems similarly, for example to WO Patent application No. 2010093234. The use of the energy-harvesting technology that converts the ambient energy (e.g. vibration, wind, solar) into the electrical power, thus reducing the power consumption of the disclosed device.

Based on the foregoing description, it will be readily understood by those persons skilled in the art that the present invention is susceptible of broad utility and application. Many embodiments and adaptations of the present invention other than those specifically described herein, as well as many variations, modifications, and equivalent arrangements, will be apparent from or reasonably suggested by the present invention and the foregoing descriptions thereof, without departing from the substance or scope of the present invention.

Accordingly, while the present invention has been described herein in detail in relation to one or more preferred embodiments, it is to be understood that this disclosure is only illustrative and exemplary of the present invention and is made merely for the purpose of providing a full and enabling disclosure of the invention. The foregoing disclosure is not intended to be construed to limit the present invention or otherwise exclude any such other embodiments, adaptations, variations, modifications or equivalent arrangements, the present invention being limited only by the claims appended hereto and the equivalents thereof.

## Claims

1. A device (1) for monitoring leakage of different hazardous materials, comprising:
a leakage sensor (2) positioned inside an enclosure (4) in proximity of a valve assembly, the leakage sensor (2) detecting parameters related to the hazardous materials and outputting a sensor signal;
a positioning unit (25) for the global positioning acquisition and outputting a position signal;
a processor unit (26) for processing the sensor signal to determine if the material parameters are below a predefined threshold;
a data transceiver unit (24), said data transceiver unit (24) having means for wireless communications (32, 33, 34); the data transceiver unit (24) transmitting the sensor signal and corresponding position signal wirelessly to a remote location processor, the data transceiver unit (24) providing a feedback signal to emergency personnel if the material parameters are above the predefined threshold,
wherein the device (1) is adapted to be mounted/un-mounted through an opening (3) of the valve protection enclosure (4) that covers and seals the valve assembly (6) to load and unload material to and from a tank (8).

2. The device (1) of claim 1, wherein the tank (8) is coupled with a railroad car, a tanker truck, or a maritime shipping container, further comprising sending the feedback signal to the tank operator/driver.

3. The device (1) of claim 1, where the sensor detecting a plurality of different hazardous materials each representing a chemical, biological, radiological, nuclear, or explosive threat.

4. The device (1) of claim 1, further comprising a memory unit for recording and storing data.

5. The device (1) of claim 1, having a battery unit (30) providing power to the sensors (2) and the data transceiver unit (24), and having energy-harvesting means that converts ambient energy into the electrical power that charges the battery unit (30).

6. The device (1) of claim 5, wherein the ambient energy is selected from vibration energy, wind energy, or solar energy.

7. The device (1) of claim 1, further having a wake-up system, a wake-up system provides reduced power consumption and provides a stealth feature in which the sensors only respond upon receipt of an appropriate wake-up signal.

8. The device (1) of claim 1, wherein the sensor and the position unit operate in pulse regime, when they perform measurements periodically, and wherein the time period between measurements depends on the last measured parameter proximity to the predefined threshold, the periods being shortened if the parameter is close to the threshold.

9. The device (1) of claim 1, further comprising a sealing sensor detecting if the enclosure is sealed, and an alarm system, the alarm system sending an alarm signal to emergency personnel if the enclosure is not sealed.

10. A method for monitoring transportation and storage of hazardous materials, comprising:
measuring a material parameter by a sensor (1) positioned inside an enclosure (4) covering a valve of a tank (8) for transportation or storage of the hazardous materials;
spotting a tank location by a global positioning unit (25);
transmitting a sensor signal and a positioning signal to a processing unit at a remote location;
comparing the sensor signal and a predefined threshold, and providing a feedback to emergency personnel if the sensor signal is above the threshold and providing a location of the tank under investigation, wherein
the sensor (1) is positioned in an opening in the enclosure (4) allowing replacement of the sensor and providing the enclosure to be sealed when the sensor is inserted.

11. The method of claim 10, wherein the tank is on a vehicle, further comprising an alarm signal to a tank operator/driver if the sensor signal is above the predefined threshold.

12. The method of claim 11, wherein the alarm signal produces a special sound on the operator's cellular phone, the sound being different from a usual phone call sound.

13. The method of claim 11, wherein the alarm signal produces a visual signal on the vehicle panel, the signal seen by the operator/driver.

14. A system for monitoring a leakage of a plurality of different hazardous materials, comprising: a tank (8), which comprises a valve assembly (6) to load and unload the material; a valve protection enclosure (4) covering the valve assembly and making it sealed; the enclosure (4) having an opening for inserting a device (1) for monitoring the leakage of different hazardous materials; the opening (3) being adapted for ease mounting and un-mounting the device (1); the device (1) mounted in the opening and making the enclosure (4) with the mounted device sealed; the device having:
a leakage sensor (2) positioned inside the tank enclosure (4) in proximity of the valve assembly (6); the leakage sensor detecting parameters related to the hazardous materials and outputting a sensor signal;
a positioning unit (25) for the global positioning acquisition and outputting a position signal;
a data transceiver unit (24), said data transceiver unit having means for wireless communications, the data transceiver unit (24) transmitting the sensor signal and corresponding position signal wirelessly to a remote location processor; and
a processor unit (26) for processing the sensor signal to determine if the material parameters are below a predefined threshold; wherein the data transceiver unit (24) provides a feedback signal to emergency personnel if the material parameters are above the predefined threshold.
